Europäisches Patentamt

European Patent Office

Office européen des brevets

(11) Publication number: **0 103 966**
**B1**

(12) **EUROPEAN PATENT SPECIFICATION**

(45) Date of publication of patent specification: **15.03.89**

(21) Application number: **83304456.3**

(22) Date of filing: **02.08.83**

(51) Int. Cl.⁴: **B 01 D 33/02,** B 01 D 33/38, B 01 D 33/26

(54) **Rotatable filter assembly.**

(30) Priority: **28.02.83 SE 8301082**
**10.02.83 SE 8300708**
**20.08.82 SE 8204770**

(43) Date of publication of application:
**28.03.84 Bulletin 84/13**

(45) Publication of the grant of the patent:
**15.03.89 Bulletin 89/11**

(84) Designated Contracting States:
**AT DE FR GB IT**

(56) References cited:
**DE-B-1 144 691**
**US-A-4 056 473**

(73) Proprietor: **AB CELLECO**
**Box 29012**
**S-100 52 Stockholm (SE)**

(72) Inventor: **Frykhult, Rune Helmer**
**Egnahemsvagen 52**
**S-141 37 Huddinge (SE)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

This invention relates to a rotatable filter assembly, intended in particular for separation of fibres from a fibre suspension. There is known a filter assembly which comprises a plurality of annular filter discs mounted on a rotatable drum and each including a plurality of filter elements. The discs are spaced apart axially of the drum and substantially parallel to each other. The drum is journalled for rotation in a container for receiving fibre suspension to be separated. Each filter element of each disc consists of a hollow body having walls made from a filter material and communicating via a filtrate outlet located at the radially inner end of the body with a respective axial discharge tube. The drum has a cylindrical wall with a frame-like structure which includes said axial discharge tubes. A collecting hopper extends into the drum and across all the filter discs carried by the drum to receive separated mass from the filter element. Means is provided to subject the interior of each filter element to a pressure lower than that prevailing at the outside thereof during at least part of each revolution of the drum.

A filter assembly of the above form is disclosed in Swedish Patent Specification No. 7406315-7 (SE—C—387.544) and has an improvement over earlier designs in that by arranging the collecting hopper in the drum, the filter surface is utilized better, since it allows a higher level of suspension in the filter container. With the collecting hopper positioned within the drum rather than between the filter discs, the latter run completely freely without wear so that their useful life is increased.

In addition the distance between the filter discs could be reduced as the space needed between the filter discs was reduced appreciably. In spite of these advantages the known rotatable disc filter assemblies still have some drawbacks. In particular a relatively large filter area is still needed for a given separation capacity. Furthermore, the axial discharge tubes of the drum had to be designed with substantially rectangular cross sections with the longer axes of symmetry coinciding with radii of the rotatable drum, in order that openings in the drum wall should be large enough for the passage of separated fibre mass to the collecting hopper. This construction of the discharge tubes, which are subject varying loads, means that their wall thickness must be relatively large, with a resulting high weight, and the manufacture is very expensive.

The aim of the present invention is to provide a rotatable filter assembly which enables a substantially increased capacity per unit of filter area, allows better operation safety, makes it possible to obtain increased dry content in the separated fibre mass, and which also has less weight and is cheaper to manufacture.

A disc filter assembly according to the invention is characterised in that said axial tubes, as seen in transverse cross section of the drum, are arranged in groups of at least two adjacent tubes.

This arrangement makes a higher capacity possible, as for a given filter area, larger openings are formed through the drum wall into the centre of the filter assembly to provide an improved passage for separated fibre mass to the hopper. The disc filter assembly can as a result be run with a substantially higher speed of revolution than hitherto possible, e.g. up to twice the speed, which means up to 40% increased capacity. The distance between the axial discharge tubes determines the size of said openings and thus the maximum speed of drum rotation.

The disc filter assembly of the invention can be substantially cheaper to manufacture as standard profiles can be used. e.g. discharge tubes with a circular cross section. In this way the weight of the disc filter assembly can be substantially lower than in previous constructions.

The invention is, however, also applicable with assemblies incorporating discharge tubes of other cross sections, for instance square. Groups of these tubes can be made together as a unit, which has the advantage that still larger openings between the groups of axial discharge tubes can be achieved.

Adjacent tubes in a group can also have a common dividing wall and have cross sections other than square, which is the case in one embodiment in which the tubes in the same group are located at substantially the same distance from the drum axis.

In one particular embodiment of the invention one filter element communicates with an axial tube which is located behind or in the rear part of same seen in the direction of rotation of the drum, and the immediately following filter element communicates with another axial tube in the same group as said tube communicating with said one filter element.

In one preferred arrangement the axial discharge tubes in the same groups have their axes of symmetry located on or in close proximity to the same radius to the axis of the rotatable drum and at different radial distances from drum axis. One embodiment of the invention including such an arrangement has the tubes closed to the axis of the drum displaced circumferentially forwardly in the direction of rotation of the drum relative to the tubes further from the drum axis. This provides especially suitable conditions for the passage of the separated fibres from the filter elements to the collecting hopper. In order to facilitate this passage it is advantageous to provide guide plates covering the fronts and preferably also the backs of the axial tubes as seen in the direction of rotation of the drum.

It may be particularly convenient to form the tubes integrally with the guide plates.

In some embodiments the guide plates may extend radially beyond the axial tubes, preferably so that they cover at least part of the radial extension of the filter elements.

The removal of the filter cake from the surface of the filter elements can be facilitated in different ways, depending on which type of fibre is present. Previously the fibre cake has been removed by spraying water or pressurized air on to the filter elements in a so-called removal zone above the collecting hopper, where no subpressure is maintained on the insides of the filter elements. There are, however, easily dewatered fibre suspensions which form thick pulp cakes on the filter elements. These pulp cakes can be difficult to remove and demand special arrangements. According to a preferred feature of the invention means may be provided to produce in the removal zone, an overpressure on a certain part of the inner side of the dewatered fibre cake, whereby to initiate the removal of the fibre cake which is then completed by the gravitational force. To facilitate the removal further the side walls of the filter elements over part of their radial extent can be inclined outwardly. Connecting pipes can be arranged at the periphery of the filter elements to open at the filter surface under the fibre cake and for connection with a supply pipe for liquid or gas under pressure. The openings of the connecting pipes should be designed in such a way, that the fibre cake can bridge over them. This means that the openings should be narrow and elongated.

It is especially suitable to arrange the connection pipes so that during a certain part of each revolution of the rotatable drum, namely in the removal zone, then communicate with a stationary supply nozzle for feed of gas or liquid under pressure. With the aid of these devices for removal of fibre cake, the amount of liquid supplied can be reduced. Whereby the dry substance content in the separated fibre mass increases. If gas under pressure is used, usually pressurized air, the gas consumption is reduced, and costs are reduced.

The invention will now be described more in detail, with reference being made to the accompanying drawings, in which:

Figure 1 shows a rotatable filter assembly according to the inventionn, in a longitudinal sectional view according to the line I—I in Figure 3;

Figure 2 is a development of a sectional view according to the line II—II in Figure 1;

Figure 3 is a sectional view according to the line III—III in Figure 1;

Figure 4 is an enlarged sectional view according to the line IV—IV in Figure 1 and corresponds to part of Figure 3;

Figure 5 is a similar view to Figure 4 showing an alternative arrangement to that of Figure 4;

Figures 6 and 7 show in cross section alternative forms of discharge tubes with guide plates;

Figure 8 is a view similar to Figure 4 showing another alternative arrangement to that of Figure 4;

Figure 9 is a sectional view according to the line IX—IX in Figure 8;

Figures 10 and 11 show in cross section alternative forms of discharge tube with a common dividing wall;

Figures 12, 13 and 14 shown in cross-section a different device for removal of fibre cake;

Figure 15 is a similar view to Figure 4 showing a further alternative arrangement to that of Figure 4; and

Figures 16, 17 and 18 show schematically and in cross-section, parts of respective apparatuses embodying the invention and including filter elements, axial tubes and outlets for filtrate.

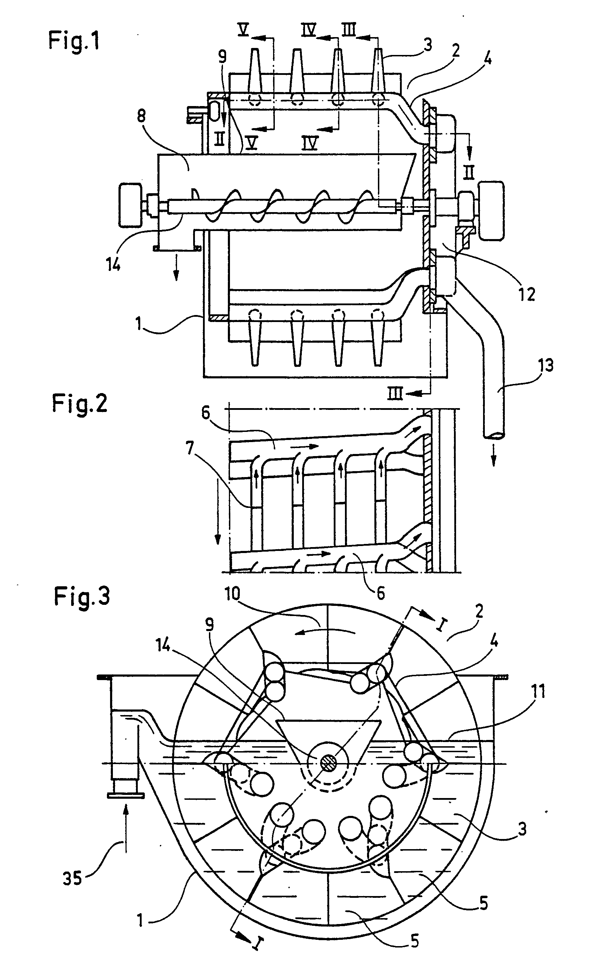

The assembly shown in Figure 1 comprises a container 1 for fibre suspension, and a horizontal filter rotor 2 partially received and rotatable in the container. The rotor includes a plurality of annular filter discs 3 mounted substantially parallel with each other on a horizontal drum 4 which is coupled to a driving motor. The filter discs 3 are each formed of a plurality of separate filter elements 5, each of which is a hollow body having walls of straining cloth.

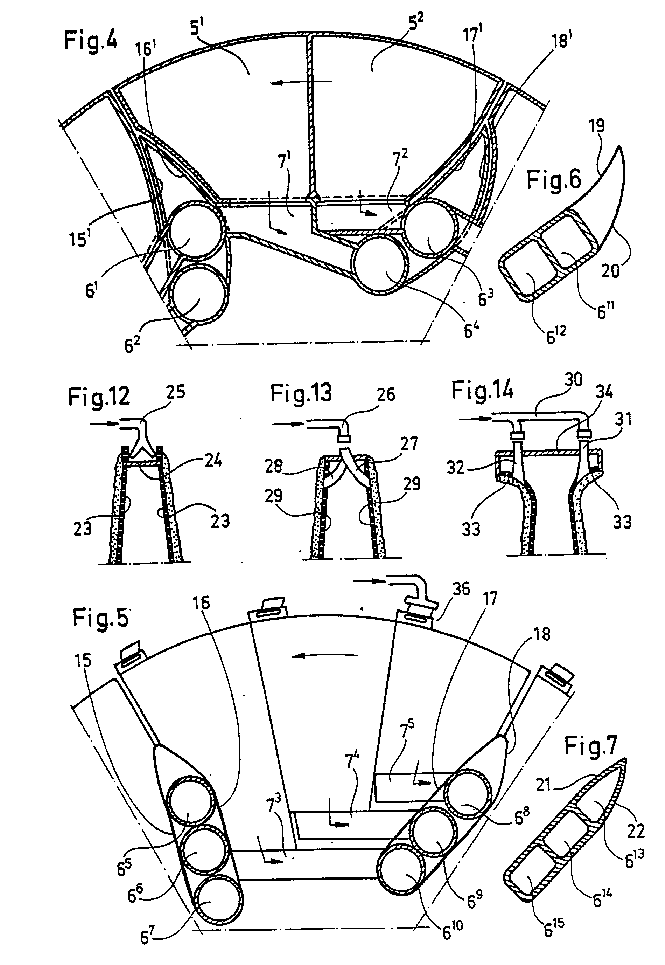

The elements 5 each communicate via a filtrate outlet at the radially inner end thereof with an axial discharge tube 6. In Figure 4 there is shown in more detail how one filter element $5^1$ is connected to an axial discharge tube $6^4$ via a transverse tube $7^1$ and an adjacent filter element $5^2$ is connected via a transverse tube $7^2$ to an axial tube $6^3$.

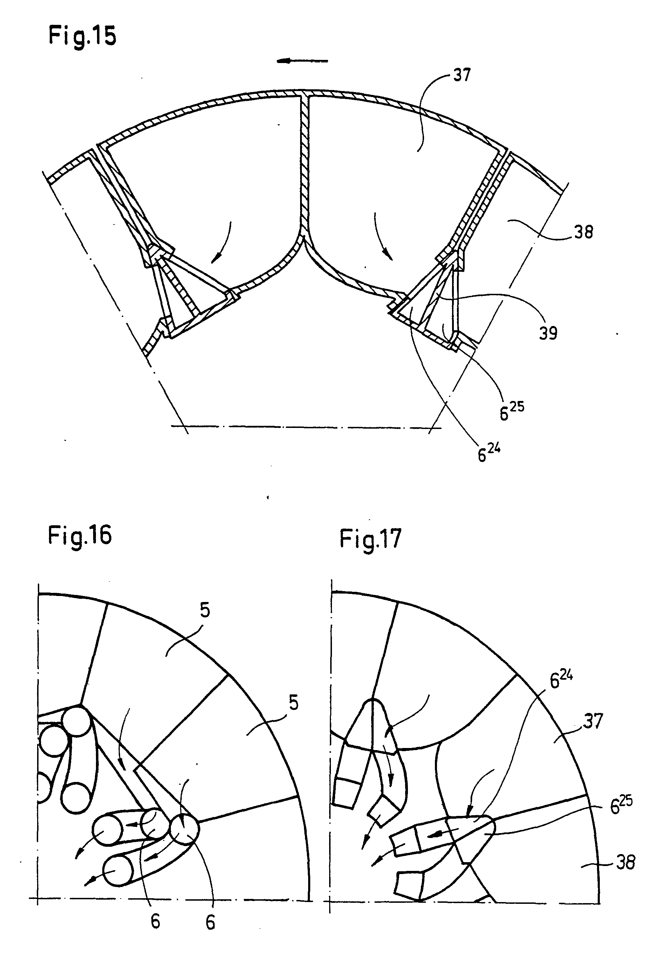

The drum 4 thus consists partly of axial discharge tubes 6 and partly from transverse tubes 7. These transverse tubes can be replaced by tubes built into the filter elements, as shown in Figures 15, 17 and 18. The coupling of the drum to a driving motor is not shown in detail in the Figure, but is well known in the art.

A collecting hopper 8 is arranged to extend into the drum 4 through one open end and has its upwardly facing opening 9 extending across all the filter discs 3 carried by drum 4. The filter rotor 2 rotates in the direction indicated with an arrow 10 in Figure 3. The level of the fibre suspension in the container 1 is shown with the line 11 in Figure 3. In order for the rotatable filter assembly to operate optimally it is essential for a subpressure to act on the interiors of filter elements 5 during part of each revolution, and to be in excess of the hydrostatic pressure acting on the outside of filter element 5 below the level 11. This subpressure can be provided by a vacuum pump or by designing a discharge pipe 13 like a so-called "falling pipe".

When the rotating filter elements 5 reach the fibre cake removal zone, the communication between the vacuum source and the interiors of the filter elements 5 is interrupted by a lock device 12, and they are instead communicated with the atmosphere so that the subpressure is released and the fibre cake can be removed by falling into the hopper 8.

In the collecting hopper 8 there is provided a transport screw 14, rotatably supported in bearings for removing the fibre mass which falls down into the collecting hopper 8.

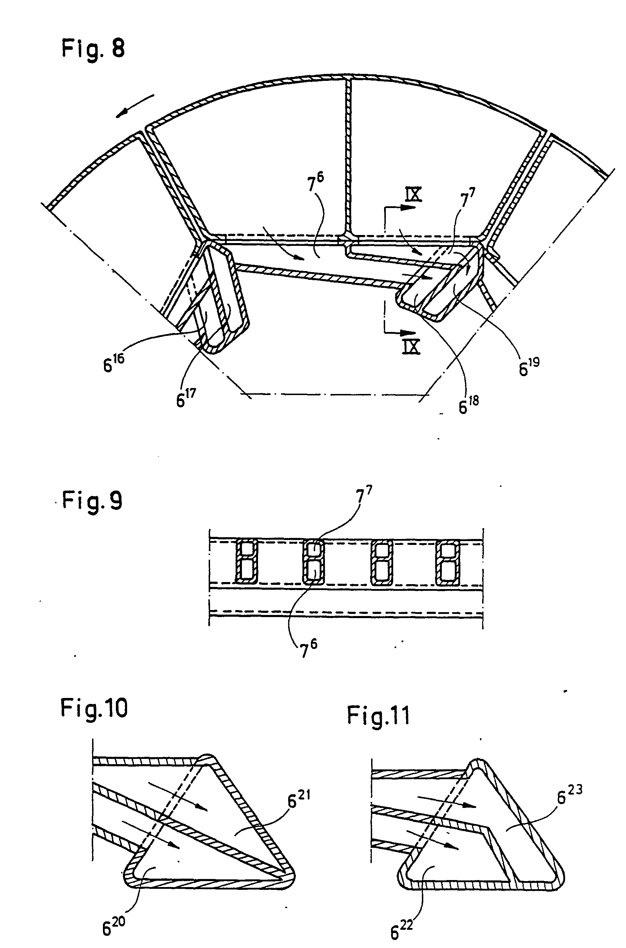

As is especially obvious from Figures 4, 5 and 8, the axial discharge tubes 6 are arranged, seen in a cross sectional view, in groups of at least two tubes. In Figures 4 and 5 arrangements are shown in which the axes of symmetry of the tubes in each group are close to the same radius to the rotatable drum axis but at different radial distances from this axis. In Figure 8 the tubes of each group are substantially at the same radial distance from said axis of the drum.

The embodiments shown in Figures 4 and 5 are designed in such a way, that the tubes closer to the axis of the rotatable drum 4 (for instance $6^2$ and $6^4$) are circumferentially displaced in the direction of rotation of the rotatable drum relative to the tubes at a greater distance from said drum axis ($6^1$ and $6^3$ in Figure 4). The tubes in Figures 4 and 5 have circular cross sections whereas those in Figures 6 and 7 are rectangular in cross section.

In order to facilitate, the removal of the fibre mass from the filter elements, as seen in Figure 5, the tubes $6^5$, $6^6$, $6^7$ and the tubes $6^8$, $6^9$, $6^{10}$ are provided with guide plates 15, 16, and 17, 18. Corresponding guide plates enclosing the tubes $6^1$, $6^2$ and $6^3$, $6^4$ are shown in Figure 4 and designated by the numerals $15^1$, $16^1$, and $17^1$, $18^1$. Often it will be sufficient to locate such guide plates only on the front side of the tubes as seen in the direction of rotation. If the tubes are rectangular as in Figures 6 and 7, the tube walls themselves can provide a major part of the guide plates, and only minor parts, denoted in these Figures with the numbers 19, 20 and 21, 22 must be added to achieve smooth passage for the fibre mass by extending the guide plates radially outwardly of the axial tubes. The guide plates 15, 16, 17, 18 in Figure 5 extend radially to such a distance that they cover part of the radial extension of the filter elements 5, whereby a safe passage for the fibre mass is guaranteed.

According to the design shown in Figure 8, the tubes $6^{16}$, $6^{17}$ and $6^{18}$, $6^{19}$ are substantially at the same radial distance from the axis of the drum and each pair of tubes has a common dividing wall. Figures 10 and 11 show some other possible arrangements of the tubes, and even in these cases the tubes of each group are at substantially the same radial distance to the axis of the drum.

In Figure 15 there is shown another arrangement which differs from those previously described in that every other filter element 38 communicates with a front axial tube which, seen in cross section, is located in front of the filter element, or at the front part of this element, in the direction of rotation of the drum. The other filter elements 37 communicate with rear axial tubes, which are located behind the filter elements or at the rear part of these elements, again seen in the direction of rotation of the drum. The axial tubes are arranged in groups of two, comprising one front and one rear axial tube $6^{24}$ and $6^{25}$ separated by a dividing wall 39.

In order to achieve optimal operation, the rear wall of the filter element, seen in the direction of rotation, is so arranged that in the position of the filter element when the communication with the vacuum source is disrupted, and the communication with atmosphere is opened up, said rear wall is inclined towards the axial tube. In other words, seen in the direction of rotation, the rear wall is inclined towards a horizontal plane.

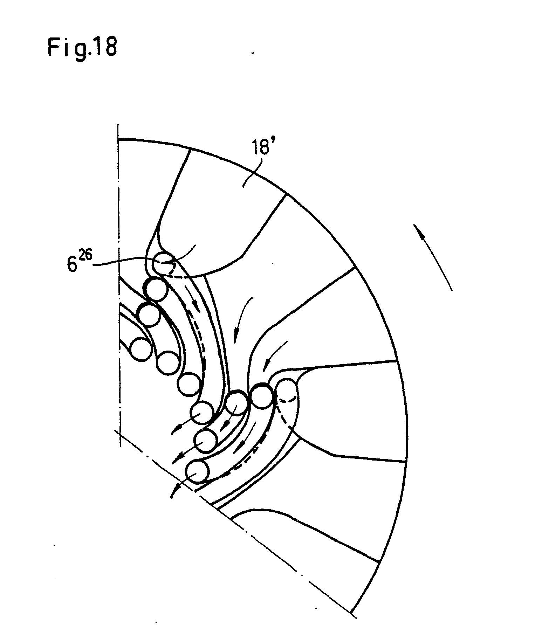

In Figure 18 there is shown schematically a combination of the principal embodiment of Figure 4 and the embodiment of Figure 15. As is apparent from the drawing, each tube group contains three axial tubes, and each third filter element $18^1$ communicates with an axial tube which, seen in the direction of rotation, is in front of said filter element or in the front part of same. The other filter elements communicate with axial tubes, which are located behind the filter elements or in the rear parts of these elements. The three types of axial tubes are arranged in groups with three tubes in each group. In Figure 18 the tubes are shown at different radial distances from the rotation axis, but an arrangement with the tubes positioned at the same radial distance from the axis arranged after each other circumferentially, is also possible.

In Figure 16 there is shown schematically the flow of the filtrate from the filter element and via an axial tube and the filtrate outlet to a lock device, which is not shown, or to another device for filtrate discharge as described above with reference to Figures 1 to 3.

In Figure 17 the flow of the filtrate is illustrated schematically for the arrangement of Figure 15.

Figure 18 illustrates the flow of filtrate in an arrangement which is a combination of the embodiments shown in Figures 16 and 17 as mentioned above.

As apparent from the drawing, in the assembly of Figure 16 the discharge openings of the axial tubes are located from the filter elements at the same angular spacing backwards therefrom, calculated from the centre of gravity for the filter area to the discharge opening. This means that the filter elements can always be emptied completely, almost independent of the form of the filter element.

In the embodiments of Figures 15 and 17, on the other hand, the filter elements should be designed with inclined rear walls in order that there are no pockets from which filtrate cannot be discharged. This is especially so for the position in which the communication with the vacuum source is interrupted.

some easily dewatered fibre suspensions give rise to very thick pulp cakes, which can only be removed from the filter elements with difficulty. In Figures 12, 13, 14 some devices are shown located at the circumference of a filter element 5 to facilitate the removal of the fibre mass from the filter surface. In Figure 12 the walls 23 of the filter element 5 are shown held together by a transverse wall 24 in such a way that the walls 23 project beyond the transverse wall 24. A nozzle means 25 is so arranged that it is directed towards the inside of the projecting parts of the walls 23, during that part of the revolution of the rotatable drum 4 during which fibre mass is to be removed, that is to say in the removal zone, so that gas or liquid can be fed through the nozzle means 25 to free the fibre mass at the outer edge so that the rest of the fibre cake gets pulled away.

As shown in Figure 13 pipe means 26 can be provided for co-operation with connecting pipes 27, 28, which open at the filter surface of the walls 29 of the filter element. Gas or liquid can be fed to the connecting pipes 27, 28 by the pipe means to assist the removal of the fibre cake.

In another embodiment shown in Figure 14, a pipe means 30 with two branches is provided for co-operation with pipes 31, 32 which open at the filter surface, in this case at outwardly bent walls 33, which are held together by a circumferential transverse wall 34. The advantage of outwardly bent walls is that the fibre cake is removed more easily.

In Figure 5 there are shown the cake removing devices of Figures 12, 13 or 14 provided in a special element 36, which communicates with the interior of the filter element.

The operation of the rotatable filter assembly of the invention is obvious from the description above. Fibre suspension is fed through an inlet 35 and fibre mass accumulates on the surfaces of the filter elements when these are submerged below the level 11 in the container 1. Filtrate is discharged continuously through the outlet pipe 13. In the upper position, that is to say in the removal zone, the subpressure in the filter elements ceases, and the fibre cake is released, possibly with the aid of the devices shown in Figures 12, 13, 14 and the dewatered fibre mass falls down in the collecting hopper 8 and is discharged.

## Claims

1. A rotatable filter assembly for separating fibres from a fibre suspension, comprising a plurality of annular filter discs (3) mounted on a horizontal drum (4) and each including a plurality of filter elements (5), the discs being spaced apart axially of the drum and substantially parallel to each other, the drum being journalled for rotation in a container (1) for receiving fibre suspension to be separated, each filter element of each disc comprising a hollow body having walls made from filter material and communicating via a filtrate outlet located at the radially inner end of the body with a respective axial discharge tube (6), the drum having a cylindrical wall with a frame-like structure which includes said axial discharge tubes, a collecting hopper (8) extending into the drum across all the filter discs to receive separated mass from the filter elements, and means to subject the interior of each filter element to a pressure lower than that at the outside thereof during at least part of each revolution of the drum, characterized in that said axial tubes (6) as seen in a transverse cross section of the drum are arranged in groups of at least two adjacent tubes.

2. A rotatable filter assembly according to claim 1, wherein the axes of symmetry of the discharge tubes (6) are located on or in close proximity to the same radius to the axis of the rotatable drum (4) and at different radial distances to the drum axis.

3. A rotatable filter assembly according to claim 1 or 2, wherein said axial discharge tubes (6) have circular cross sections.

4. A rotatable filter assembly according to claim 1, 2 or 3, wherein the tubes ($6^2$, $6^4$) closer to the axis of the drum (4) are displaced circumferentially forwardly in the direction of rotation of the drum (4) relative to the tubes ($6^1$, $6^3$) further from the drum axis.

5. A rotatable filter assembly according to claim 1, wherein the tubes in the same group are located at substantially the same distance from the axis of said drum (4).

6. A rotatable filter assembly according to any of claims 1 to 5, wherein one filter element (37) communicates with an axial tube ($6^{24}$) which is located behind the filter element (37) or in the rear part of said element as seen in the direction of rotation of the drum, and the immediately following filter element (38) communicates with an axial tube ($6^{25}$) grouped together with the axial tube ($6^{24}$) communicating with said one filter element.

7. A rotatable filter assembly according to any of claims 1, 2, 4, 5 or 6, wherein the tubes ($6^{16}$, $6^{17}$, $6^{24}$, $6^{25}$) of each group are formed with at least one common dividing wall.

8. A rotatable filter assembly according to any of claims 1 to 7, wherein guide plates (15—18) are provided and cover at least the fronts of the axial tubes (6) as seen in the direction of rotation of the drum.

9. A rotatable filter assembly according to claim 8, wherein said guide plates (15—18) extend radially beyond the axial tubes (6).

10. A rotatable filter assembly according to claim 9, wherein said guide plates (15—18) extend radially to cover at least part of the radial extension of the filter elements (5).

11. A rotatable filter assembly according to any of claims 1 to 10, wherein the filter elements (5) over at least part of their radial extent have outwardly curved side walls (33).

12. A rotatable filter assembly according to any of claims 1 to 11, wherein the filter elements (5) are provided with pipes (27, 28, 31, 32) opening at the filter surface and arranged for connection with a supply pipe (26, 30) for liquid or gas under pressure to assist removal of separated material from the filter surface.

13. A rotatable filter assembly according to claim 12, wherein said pipes (27, 28, 31, 32) are arranged to communicate, during a predetermined part of each revolution of the drum (4), with a stationary nozzle for feed of gas or liquid under pressure.

14. A rotatable filter assembly according to any of claims 10 to 13, wherein the side walls (23) of the filter elements extend radially beyond a transverse wall (24) which connects said side walls together.

**Patentansprüche**

1. Drehbare Filteranordnung zum Abscheiden von Fasern aus einer Fasersuspension, die eine Vielzahl von auf einer wagerechten Trommel (4) angeordneten ringförmigen Filterscheiben (3) mit jeweils einer Vielzahl von Filterelementen (5) aufweist und bei der die Scheiben entlang der Trommel axial beabstandet und im wesentlichen parallel zueinander angeordnet sind, die Trommel drehbar in einem Behälter (1) zur Aufnahme der aufzutrennenden Fasersuspension gelagert ist, jedes Filterelement jeder Scheibe einen hohlen Körper mit Wandungen aus Filtermaterial aufweist und über einen Filtratauslaß am radial inneren Ende des Körpers in Strömungsverbindung mit einem zugehörigen axialen Austragrohr (6) steht, die Trommel eine zylindrische Wand mit einer rahmenartigen Konstruktion aufweist, die die axialen Austragrohre enthält, eine Sammelwanne (8) über alle Filterscheiben in die Trommel hineinverläuft und die abgetrennte Masse von den Filterelementen her aufnimmt, und Mittel vorgesehen sind, um während mindestens eines Teils jeder Trommelumdrehung das Innere jedes Filterelements mit einem niedrigeren als seinem Außendruck zu beaufschlagen, dadurch gekennzeichnet, daß die axialen Rohre (6) im Trommelquerschnitt zu mindestens jeweils zweien nebeneinander gruppiert sind.

2. Drehbare Filteranordnung nach Anspruch 1, bei der die Symmetrieachsen der Austragrohre (6) auf oder sehre nahe dem gleichen Radius zur Achse der drehbaren Trommel (4) und in unterschiedlichen radialen Abständen zur Trommelachse angeordnet sind.

3. Drehbare Filteranordnung nach Anspruch 1 oder 2, bei der die axialen Austragrohre (6) im Querschnitt kreisförmig sind.

4. Drehbare Filteranordnung nach Anspruch 1, 2 oder 3, bei der die näher an der Achse der Trommel (4) liegenden Rohre ($6^2$, $6^4$) relativ zu den von der Trommelachse weiter entfernt liegenden Rohren ($6^1$, $6^3$) in Umfangrichtung in Drehrichtung der Trommel (4) vorwärts versetzt liegen.

5. Drehbare Filteranordnung nach Anspruch 1, bei der die Rohre der gleichen Gruppe von der Achse der Trommel (4) im wesentlichen gleichbeabstandet liegen.

6. Drehbare Filteranordnung nach einem der Ansprüche 1 bis 5, bei der ein Filterelement (37) mit einem axialen Rohr ($6^{24}$) in Verbindung steht, das in der Drehrichtung der Trommel gesehen hinter dem Filterelement (37) oder im hinteren Teil desselben angeordnet ist, und das unmittelabr folgende Filterelement (38) mit einem axialen Rohr ($6^{25}$) in Verbindung steht, das mit dem einen Filterelement in Verbindung stehenden axialen Rohr ($6^{24}$) in einer Gruppe zusammengefaßt ist.

7. Drehbare Filteranordnung nach einem der Ansprüche 1, 2, 4, 5 oder 6, bei der die Rohre ($6^{16}$, $6^{17}$, $6^{24}$, $6^{25}$) jeder Gruppe mit mindestens einer gemeinsamen Trennwand ausgeführt sind.

8. Drehbare Filteranordnung nach einer der Ansprüche 1 bis 7 bei der Leitplatten (15—18) vorgesehen sind und die axialen Rohre (6) in der Drehrichtung der Trommel gesehen mindestens auf der Vorderseite abdecken.

9. Drehbare Filteranordnung nach Anspruch 8, bei der die Leitplatten (15—18) radial über die axialen Rohre (6) hinaus vorstehen.

10. Drehbare Filteranordnung nach Anspruch 9, bei der die Leitplatten (15—18) radial so verlaufen, daß sie die Filterelemente (5) über mindestens eine Teil ihrer Radialausdehnung abdecken.

11. Drehbare Filteranordnung nach einem der Ansprüche 1 bis 10, bei der die Filterelement (5) über mindestens einen Teil ihrer Radialausdehnung auswärts gekrümmte Seitenwände (33) aufweisen.

12. Drehbare Filteranordnung nach einem der Ansprüche 1 bis 11, bei der die Filterelemente (5) mit Rohren (27, 28, 31, 32) versehen sind, die an der Filteroberfläche münden und mit einer Leitung (26, 30) verbindbar sind, über die eine Druckflüssigkeit oder ein Druckgas zugeführt werden kann, um das Entfernen des abgetrennten Materials von der Filteroberfläche zu unterstützen.

13. Drehbare Filteranordnung nach Anspruch 12, bei der die Rohre (27, 28, 31, 32) über einer vorbestimmten Teil jeder Umdrehung der Trommel (4) mit einer ortsfesten Düse zur Zufuhr einer Druckflüssigkeit bzw. eines Druckgases verbindbar angeordnet sind.

14. Drehbare Filteranordnung nach einem der Ansprüche 10 bis 13, bei der die Seitenwände (23) der Filterelemente radial über einer Querwand (24) hinaus vorstehen, die die Seitenwände miteinander verbindet.

**Revendications**

1. Dispositif de filtration rotatif pour séparer des fibres d'une suspension de fibres, comprenant plusieurs disques de filtration annulaires (3) montés sur un tambour horizontal (4) et comportant chacun plusieurs éléments de filtration (5), les disques étant espacés axialement du tambour et sensiblement parallèles les uns aux autres, le tambour étant monté à rotation dans un récipient (1) pour recevoir la suspension de fibres à séparer, chaque élément de filtration de chaque disque comprenant un corps creux dont les parois sont réalisées en un matériau filtrant et communiquant avec une sortie à filtrat disposée à l'extrémité radialement interne du corps et comprenant un tube de décharge axial respectif (6), le tambour présentant unes paroi cylindrique à structure du type à cadre qui comprend lesdits tubes de décharge axiaux, une trémie collectrice (8) s'étendant dans le tambour à travers tous les disques de filtration pour recevoir la masse séparée des éléments de filtration, et des moyens pour soumettre l'intérieur de chaque élément de filtration à une pression inférieure à celle régnant à l'extérieur de celui-ci pendant au moins une partie de chaque révolution du tambour, caractérisé en ce que lesdits tubes axiaux (6), vus en section transversale du tambour, sont aménagés par groupes d'au moins deux tubes adjacents.

2. Dispositif de filtration rotatif selon la revendication 1, dans lequel les axes de symétrie des tubes de décharge (6) sont situés sur ou à proximité étroite du même rayon allant à l'axe du tambour rotatif et à des distances radiales différentes de l'axe du tambour.

3. Dispositif de filtration rotatif selon la revendication 1 ou 2, dans lequel lesdits tubes de décharge axiaux (6) sont de section circulaire.

4. Dispositif de filtration rotatif selon la revendication 1, 2 ou 3, dans lequel les tubes ($6^2$, $6^4$) qui sont les plus proches de l'axe du tambour (4) sont décalés circonférentiellement vers l'avant dans le sens de la rotation du tambour (4) par rapport aux tubes ($6^1$, $6^3$) qui sont plus loin de l'axe du tambour.

5. Dispositif de filtration rotatif selon la revendication 1, dans lequel les tubes d'un même groupe sont situés sensiblement à la même distance de l'axe dudit tambour (4).

6. Dispositif de filtration rotatif selon l'une quelconque des revendications 1 à 5, dans lequel un élément de filtration (37) communique avec un tube axial ($6^4$) qui est situé à l'arrière de l'élément de filtration (37) ou de la partie arrière dudit élément, vu dans le sens de la rotation du tambour, et l'élément de filtration (38) immédiatement suivant communique avec un tube axial ($6^{25}$) regroupé avec le tube axial ($6^{24}$) qui communique avec ledit élément de filtration.

7. Dispositif de filtration rotatif selon l'une quelconque des revendications 1, 2, 4, 5 ou 6, dans lequel les tubes ($6^{16}$, $6^{17}$, $6^{24}$, $6^{25}$) de chaque groupe comprennent au moins une paroi séparatrice commune.

8. Dispositif de filtration rotatif selon l'une quelconque des revendications 1 à 7, dans lequel des plaques de guidage (15—18) sont prévues et recouvrent au moins les parties avant des tubes axiaux (6), quand un regarde dans le sens de la rotation du tambour.

9. Dispositif de filtration rotatif selon la revendication 8, dans lequel lesdites plaques de guidage (15—18) s'étendant radialement au-delà des tubes axiaux (6).

10. Dispositif de filtration rotatif selon la revendication 9, dans lequel lesdites plaques de guidage (15—18) s'étendant radialement de manière à recouvrir au moins une partie de la dimension radiale des éléments de filtration (5).

11. Dispositif de filtration rotatif selon l'une quelconque des revendications 1 à 10, dans lequel les éléments de filtration (5) comprennent des parois latérales recourbées vers l'extérieur (33) sur au moins une partie de leur étendue radiale.

12. Dispositif de filtration rotatif selon l'une quelconque des revendications 1 à 11, dans lequel les éléments de filtration (5) sont munis de tubes (27, 28, 31, 32) débouchant à la surface de filtration et aménagés pour être reliés à un tube d'alimentation (26, 30) destiné à un liquide ou à un gaz sous pression pour faciliter le retrait du matériau séparé de la surface de filtration.

13. Dispositif de filtration rotatif selon la revendication 12, dans lequel lesdits tubes (27, 28, 31, 32) sont agencés pour communiquer pendant une partie prédéterminée de chaque révolution du tambour avec une buse fixe d'alimentation de gaz ou de liquide sous pression.

14. Dispositif de filtration rotatif selon l'une quelconque des revendications 10 à 13, dans lequel les parois latérales (23) des éléments de filtration s'étendant radialement au-delà d'une paroi transversale (24) qui relie ensemble lesdites parois.

Fig.1

Fig.2

Fig.3

Fig.4

Fig.6

Fig.12

Fig.13

Fig.14

Fig.5

Fig.7

Fig. 8

$7^6$

IX

$7^7$

$6^{16}$

$6^{17}$

$6^{18}$

$6^{19}$

IX

Fig. 9

$7^7$

$7^6$

Fig. 10

$6^{21}$

$6^{20}$

Fig. 11

$6^{23}$

$6^{22}$

3

Fig.15

37

38

39

6²⁵

6²⁴

Fig.16

5

5

6

6

Fig.17

6²⁴

37

6²⁵

38

Fig.18

18'

6²⁶